Europäisches Patentamt

European Patent Office

Office européen des brevets

(11) Publication number: **0 097 360**
**B1**

## (12) EUROPEAN PATENT SPECIFICATION

(45) Date of publication of patent specification: **16.09.87**

(51) Int. Cl.⁴: **H 04 Q 11/04**

(21) Application number: **83106038.9**

(22) Date of filing: **21.06.83**

(54) **Modular self-routing PCM switching network with virtual-channel routing control for distributed-control telephone exchanges.**

(30) Priority: **22.06.82 IT 6779082**

(43) Date of publication of application:
**04.01.84 Bulletin 84/01**

(45) Publication of the grant of the patent:
**16.09.87 Bulletin 87/38**

(84) Designated Contracting States:
**AT BE CH DE FR GB LI NL SE**

(56) References cited:
**EP-A-0 017 988**
**EP-A-0 034 776**
**EP-A-0 056 600**
**EP-A-0 089 683**
**EP-A-0 103 083**

**INTERNATIONAL SWITCHING SYMPOSIUM,
21st-25th September 1981, Montreal, session
32 A, paper 1, pages 1-7, CA, R. GALIMBERTI et
al.: "Proteo system: an overview"**

**INTERNATIONAL SWITCHING SYMPOSIUM,
21st-25th September 1981, Montreal, session
12 B, paper 13 B 3, pages 1-7, CA, F. MELINDO
et al.: "LSI components for digital line stages"**

(73) Proprietor: **CSELT Centro Studi e Laboratori
Telecomunicazioni S.p.A.
Via Guglielmo Reiss Romoli, 274
I-10148 Turin (IT)**

(72) Inventor: **Belforte, Piero
Via Fabbriche, 7
Torino (IT)**
Inventor: **Garetti, Enzo
Via Monte Vodice, 18
Torino (IT)**
Inventor: **Pilati, Luciano
Via Sospello, 121
Torino (IT)**

(74) Representative: **Riederer Freiherr von Paar zu
Schönau, Anton et al
Van der Werth, Lederer & Riederer Freyung 615
Postfach 2664
D-8300 Landshut (DE)**

Courier Press, Leamington Spa, England.

**0 097 360**

(56) References cited:
**INTERNATIONAL SWITCHING SYMPOSIUM, 25th-29th October 1976, Kyoto, Japan, paper 423-3, pages 1-8, K.E. WURHMANN: "Corrective maintenance in the integrated FCM telecommunications system IFS-1"**

**NTG-FACHBERICHTE, vol. 73, THE INTERNATIONAL SYMPOSIUM ON SUBSCRIBER LOOPS AND SERVICES, 15th-19th September 1980, Munich, pages 109-113, VDE-Verlag GmbH, Berlin, DE, C. EASTON: "A subscriber carrier terminal interface for an integrated digital switching system"**

**0 097 360**

## Description

This invention relates to PCM switching systems, and especially to a self-routing modular PCM switching network as defined in the prior art portion of claim 1, i.e. with distributed control and diagnosis and a plurality of time division stages for distributed-control telephone exchanges, such PCM switching network being generally known from International Switching Symposium, 21st to 25th September, 1981, Montreal, Session 32A paper 1, pages 1 to 7.

Several modular PCM switching networks with distributed control have already been developed.

For example, EP—A—56 600 based on European patent application 82 100 149.2 by CSELT describes a modular PCM switching network with distributed control and diagnosis and a plurality of time division stages, belonging to a centralized-control telephone exchange and made up of modular switching units consisting basically of integrated switching matrices with microprocessor-compatible asynchronous control, of integrated ancillary circuits for diagnosis, and of a microprocessor constituting the lowest level of a three-level hierarchical control network, said modular switching units, in the case of five time division stages, being functionally diversified in a plurality of peripheral switching units folded in construction and comprising the first and fifth time division stages of said network, in a plurality of central switching units folded in construction and comprising the second and fourth time division stages, and in a plurality of unfolded central switching units comprising the third time division stage of the network, means also being provided for capillary diagnosis of all interstage links. This network, however, is designed for a centralized telephone control, and not for a distributed-control telephone exchange towards which current technology is evolving.

A "switching port" used to provide a modular network structure suitable for interfacing with a telephone control distributed on the network periphery is described in UK patent application No. 2 016 866 filed by International Standard Electric Corporation. This network comprises several stages consisting of "switching elements" made up of 16 switching ports each of which is an integrated component which switches the 32 16-bit channels of a single non-standard bidirectional PCM group. Each switching element is capable of identifying a free output channel through a wired logic network on each port. All other routing orders are provided stage by stage by the peripheral control, using the same channel on which the conversation will be routed. The application flexibility of the switching element in this system is limited by the use of wired logic routing units. Moreover, the routing procedures require that the messages sent by very detailed and in fact they are organized on 16 bits. Consequently, the system is not compatible with the standard PCM, and thus necessitates the use of special components which cannot be used in other parts of the telephone exchange or in other telephone applications incorporating standard PCM channels. This further reduces system flexibility and, furthermore, makes it necessary to have interface circuits for signal format conversion. Incompatibility with standard PCM systems is accentuated by the fact that the same channel which is subsequently used for speech is first used for signalling, which makes it necessary to supplement transmitted messages with an information determining whether the message is speech or signalling. Again concerning routing procedures, the network control is left to a great extent to the telephone exchange control. This makes it impossible to lighten the exchange's network management load efficiently, given that the telephone control must order the connection to be made on each individual switching element stage by stage. Finally, network diagnostics is not decentralized down to the individual switching element level and thus devolves entirely on the supervision units located at the network periphery.

Another example of a network for distributed-control telephone exchanges is described in a paper entitled "Time-division distributed switching system" presented at the International Switching Symposium, Montreal, September 21—25, 1981. This paper describes a switching network consisting of time switching stages controlled by microprocessors and of space switching stages with interstage connections carried out by 10-bit parallel PCM groups. The network is capable of routing PCM channels autonomously with a "step-by-step" procedure on the basis of commands from the telephone control distributed on its periphery. Routing orders use the same channel which is subsequently used for speech; two additional bits serve to indicate whether the message is signalling or speech. This type of structure, however, presents a number of disadvantages: 1) It requires two different types of switching elements (namely time and space switching elements), rather than a single switching element; 2) The network expansion requires that interstage links be rearranged through a different configuration of space stages; 3) The time switching element does not operate on standard serial PCM groups and thus cannot be generally used in switching; 4) The network periphery is burdened by the need for interface circuits to convert standard serial PCM groups arriving from users and links in the format required within the switching network; 5) The use of 10 bit parallel PCM groups makes the connections between network switching elements cumbersome; 6) Switching capacity in terms of PCM channels handled by the basic module is limited; and 7) Here again, diagnosis is not decentralized down to the individual basic module level, and thus depends entirely upon the peripheral supervision units.

Finally, a self-routing switching network for a telephone exchange with peripheral telephone control units is known from the above paper "Proteo System: an Overview", International Switching Symposium, 21st to 25th September 1981, Montreal, Session 32A pager 1, pages 1 to 7. Therein, the dialogue among the controllers and between the controllers and the peripheral telephone control units exploits one channel of the PCM groups switched by the network, which channel thus is lost for the information traffic.

3

**0 097 360**

Contrary to this, the invention as claimed in claim 1 leads to an optimal efficiency and performance. For such dialogue, it uses channels conveyed by the same PCM links conveying speech, but in a direction opposite to speech, thereby providing for special dedicated time channels which in the following description will be termed "virtual channels". A preferred embodiment consists of modular switching elements each of which comprises PCM switching matrices made up of special, large scale integration integrated circuits of general use in switching, a local controller consisting of a commercially available microprocessor, and special, large scale integration integrated circuits used for local diagnosis, and permits dialogue between the controllers of each unit and the corresponding controllers of the connected units and/or with the telephone control units distributed on the network periphery using the same channels which connect network units to each other and/or to the periphery in a way which is compatible with standard PCM systems and thereby eliminates the need for format conversion interfaces and relieves the telephone control of network management tasks.

Different aspects of the PCM switching network disclosed here as claimed in European patent application 83 106 042.1 in the name of the present applicant, filed on 21st June, 1983 and published as EP—A—103 083.

Embodiments of the invention will now be described with reference to the accompanying drawings, in which:

Fig. 1 shows general schematics of a PCM switching network embodying the invention;

Fig. 2 illustrates the PCM switching network of Fig. 1 in folded form and its connections with the network periphery, and in particular with the telephone control;

Fig. 3, 4 and 5 are block diagrams of the switching units used in the network of Fig. 1;

Fig. 6 is a block diagram of the circuit used for the dialogue between controllers;

Fig. 7 illustrates a connection through the network.

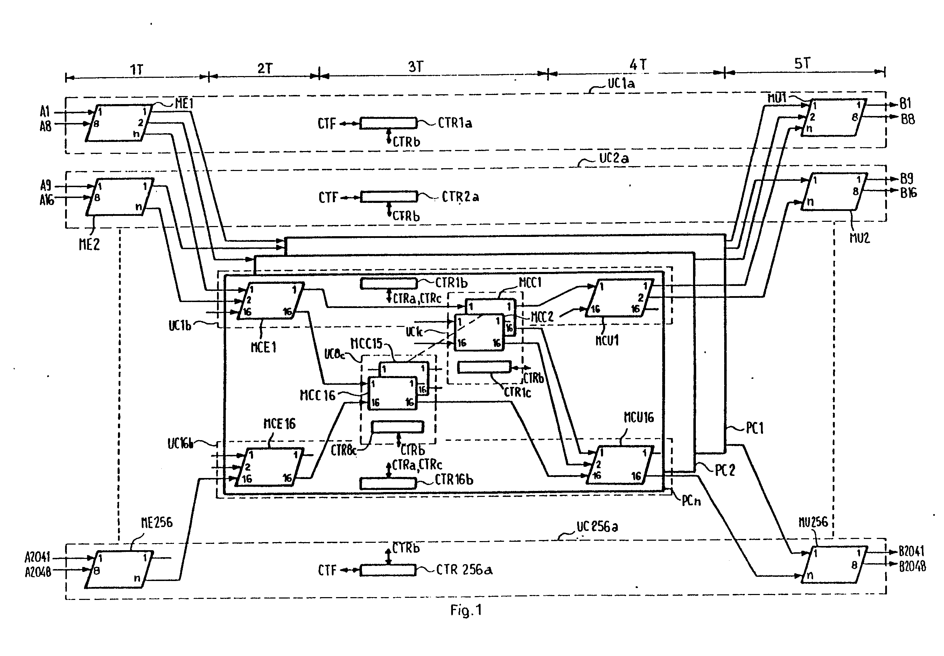

Fig. 1 shows an example of switching network with five time division stages (1T, 2T, 3T, 4T, 5T) in the case of a transit exchange with 2048 incoming PCM links A1 ... A8, A9 ... A16 ... A2041 ... A2048, and 2048 outgoing PCM links B1 ... B8, B9 ... B16 ... B2041 ... B2048, each intended to carry a standard PCM group with 32 8-bit channels.

The extension of the following considerations to network structures which differ in number of both channels and stages, or to exchanges of differing type is, as will be shown, within the normal ability of the skilled in the art.

The first stage consists of 256 rectangular PCM switching matrices ME1 ... ME256, having 8 inputs connected to an equal number of incoming lines and n outputs ($8 \leq n \leq 16$) towards the second stage.

The three central stages are organized in n planes PC1, PC2 ... PCn referred to below as central switching planes and each including 16 squared matrices capable of handling 16 incoming/outgoing groups. The Figure shows only plane PCn in detail; stage 2T matrices are designated with MCE1 ... MCE16, stage 3T matrices with MCC1 ... MCC16, and stage 4T matrices with MCU1 ... MCU16.

The fifth stage consists of 256 rectangular matrices MU1 ... MU256, identical to matrices ME, but capable of handling n input groups and 8 output groups.

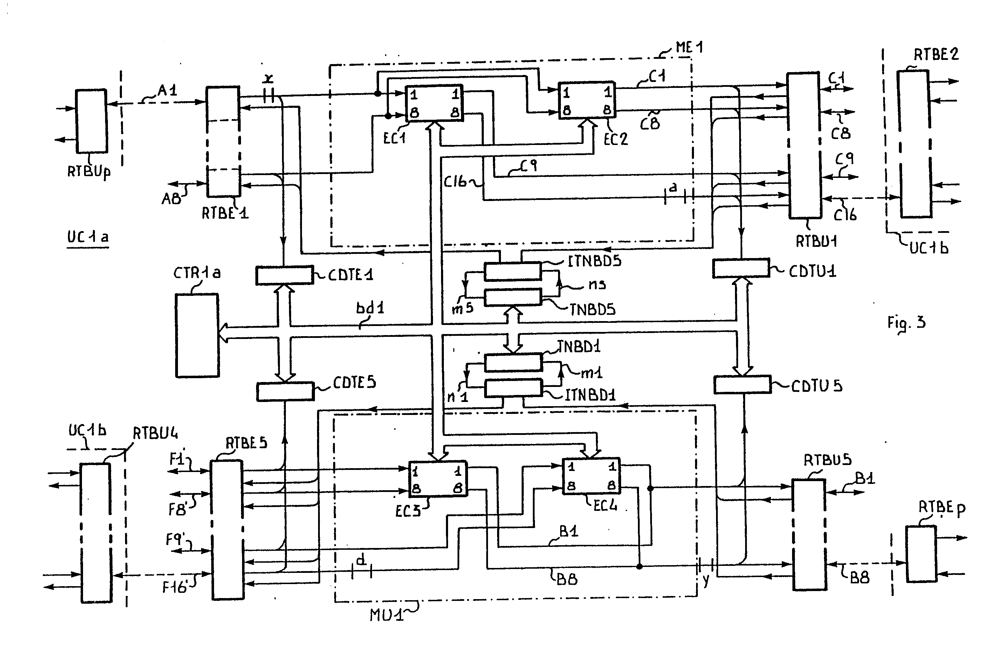

These matrices all start from a single switching element with 8 input groups and 8 output groups as described in EP—A—39 948 based on European patent application 81103628.4 by CSELT. Connections between individual elements so as to produce $8 \times n$ and $16 \times 16$ matrices are shown in Figures 3 to 5 of that application.

Connection between first stage matrices ME and second stage matrices MCE is such that all the first groups outgoing from the 256 matrices ME are connected in order to the 256 inputs of central plane PC1, the second groups are connected to the 256 inputs of central plane PC2, and so on up to the $n^{th}$ groups, which are connected to the inputs of plane PCn. Connection between outputs of planes PC1 ... PCn and inputs of matrices MU1 ... MUn is the converse of connection between matrices ME and inputs of planes PC1 ... PCn.

Matrices MCE, MCC and MCU are connected to each other within each plane. More particularly, the first outgoing groups from the 16 matrices MCE1 ... MCE16 are connected in order to the 16 inputs of matrix MCC1, the second outgoing groups from the same matrices MCE1 ... MCE16 are connected in order to the 16 inputs of matrix MCC2, and so on up to the sixteenth outgoing groups, which are connected to the 16 inputs of matrix MCC16. Connection between matrices MCC and MCU is the converse of that between matrices MCE and MCC.

As shown in Figure 1, the position of central stage 3T made up of matrices MCC is symmetrical to the rest of the network.

Areas UC1a ... UC256a, UC1b ... UC16b, UC1c ... UC8c enclosed by dashed lines indicate groupings of basic matrices each of which is associated with a microprocessor controller CTR1a ... CTR256a; CTR1b ... CTR16b; CTR1c ... CTR8c. These groupings correspond to effective constructional modules of the network, identified below as switching units. These modules are provided by a single type of printed circuit board, and use the same types of component. Modules differ in equipment condition, and many also have controllers with different software.

In particular, switching units UC1a ... UC256a include a matrix ME and a matrix MU, i.e. a first stage matrix and a fifth stage matrix; units UC1b ... UC16b include a matrix MCE and a matrix MCU of the second and fourth stages respectively; and units UC1c ... UC8c each contain two matrices MCC. For the

4

sake of brevity, units UC1a—UC256a, UC1b—UC16b, UC1c—UC8c will also be referred to below as UCa, UCb, UCc.

With this arrangement, the network of Figure 1 may be used as a folded network. Thus, the same switching unit will have available both the incoming group A1 . . . A2048 and the corresponding outgoing group B1 . . . B2048 which are both subject to governing and diagnostic functions by the same controller CTR. This also makes it possible to adopt the particular forwarding procedures for messages relating to network control which will be described below.

Moreover, the constructional folding of switching units UCa and UCb makes it possible to divide the switching capacity of units UCa in two blocks of 256 channels used respectively in the first and fifth stage, and to divide the capacity of units UCb, in two blocks of 512 channels used in the second and fourth stage. This has the advantage of providing a modular growth step for total network capacity of 256 PCM channels on the periphery, rather than the 512 channels which would be provided by using the individual switching unit in unfolded form, i.e. with two matrices of the same stage. Thus, in the event of failure of any one of said constructional units, the number of links remaining out of service can be limited to 256.

Network modular growth characteristics are good in that said growth is obtained by progressively increasing the number of switching units UCa in periphery, and by increasing the number of folded switching units UCb within each switching plane PC. Consequently, each increase of 16 switching units UCa corresponds to an increase of one switching unit UCb in each of the n switching planes PC.

The type of inter-stage connection described makes the network completely accessible.

The possibility of varying the number of central planes up to a maximum of 16 gives very low blocking probability values.

From the point of view of reliability, and in addition to the abovementioned periphery degradation modularity, the network central stages respond to failure with a degradation of traffic which is extremely limited in extent, given that any failure affects a maximum of 1024 interstage channels.

The tasks of controllers CTR include: management of dialogue with the CTR's of connected switching units; execution of routing orders (connection, disconnection blocking); diagnosis of connections set up; autodiagnosis; alarm message generation and handling; identification of network configuration (recognition of connected units UC).

Controllers of the various switching units are connected to each other in a fashion analogous to that of the matrices. For dialogue with the controllers of other network stages or with the telephone control (not shown) for purposes of network management, a controller preferably has available a number of bidirectional communication channels which is equal to the number of PCM groups handled by the corresponding switching unit UC.

These channels are separate as concerns the information flow and are conveyed along the same physical paths as PCM groups. According to the present invention, routing information (or control information in general) on a physical path are transmitted in a direction opposite to that of speech. More particularly, routing information concerning an input group of a network switching unit are sent through the corresponding output group, and vice versa.

The dialogue channels are thus dedicated time channels here termed "virtual channels", meaning that they are not associated with independent physical paths, but are derived from a path whose other transmission direction is already used.

With this arrangement it is no longer necessary to use bits to distinguish between messages relating to the dialogue and speech. Consequently, the network can handle standard PCM channels.

The virtual dialogue channels are provided by circuits present in each switching unit, as will be described more fully below.

Bidirectional arrows CTRa, CTRb, CTRc, CTF show connections of the controllers to each other and to the telephone control.

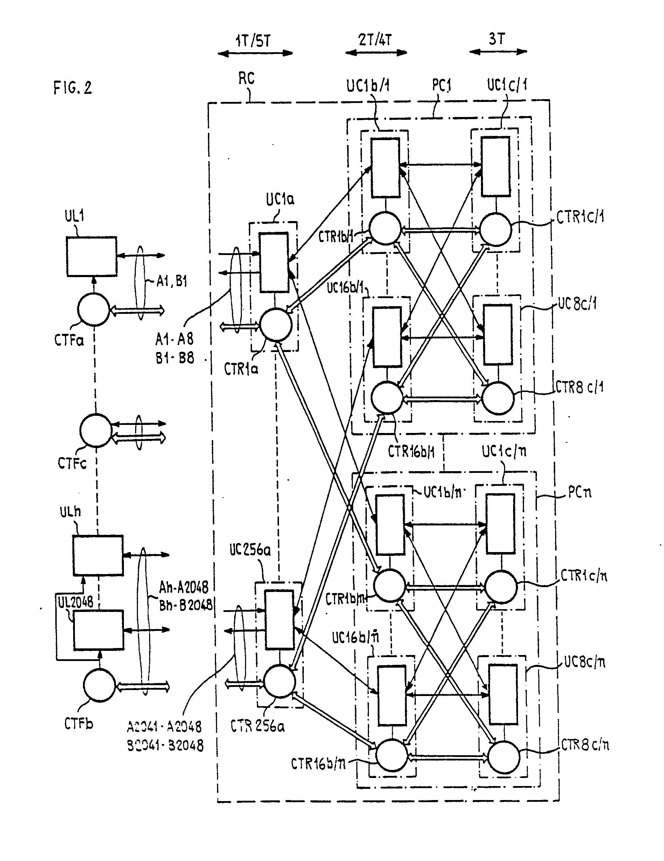

Connections between matrices and between controllers are also shown in Figure 2 together with connections with the telephone control. Figure 2 shows network RC of Figure 1 in symbolic and folded form, as well as its insertion in a distributed-control telephone exchange; peripheral units UL1 . . . ULh . . . UL2048 of this exchange are shown connected to links or to subscribers. These units are associated singly (UL1) or in groups to peripheral telephone control units CTFa, CTFb; in the more general case the network is also connected to other peripheral telephone control units CTFc which can perform functions of a higher hierarchical level than those of CTFa and CTFb, or dialogue functions between said units. Auxiliary functions may also be performed. Units CTFa, CTFb and CTFc together make up the distributed telephone control. Dialogue between these units is through speech channels derived from PCM connections towards the network in the drawing (single line arrows) while dialogue between these units and the network controllers is through a virtual PCM channel for each group towards the network (double line arrows). Also within network RC, single line arrows indicate speech connections and double line arrows indicate channels for dialogue between controllers.

The elements described with reference to Figure 1 have been indicated with the same symbols, an indication of the plane to which they belong being added for units UCb, UCc and their respective controllers. Connections between matrices are shown separately from those between controllers because they form two conceptually separats networks even if in reality they use the same physical paths. Given that routing information travels in the opposite direction to speech information, each path which conveys a network output group (B1, for example) will convey towards the network the routing information relating to the input group (A1) handled by the same switching unit and vice versa.

Figure 3 shows switching unit UC1a in detail. For purposes of example it is here supposed that matrices ME1 and MU1 perform an expansion from 8 to 16 groups or a concentration from 16 to 8 groups respectively. To this end, said matrices each consist of two switching elements EC1, EC2 and respectively EC3, EC4 of which the first two have inputs connected in parallel to groups A1 . . . A8 while the other two have outputs connected in parallel to groups B1 . . . B8. The four switching elements EC1 . . . EC4 are connected to controller CTR1a through a directional data bus bd1. C1 . . . C16 indicate the 16 output groups of ME1 towards the second stage, and F1' . . . F16' indicate the input groups of MU1 from the fourth stage.

In addition to the switching matrices and the controller, the switching unit also includes ancillary circuits for diagnosis CDTE1, CDTU1 . . . CDTE5, CDTU5 and circuits RTBE1, RTBU1 . . . RTBE5, RTBU5, TNBD1, ITNBD1 . . . TNBD5, ITNBD5 for dialogue with the controllers of units UCb (Fig. 1) and with distributed telephone control CTFa, CTFb, CTFc (Fig. 2). Numbers 1 and 5 indicate circuits belonging to first or fifth network stages, while letters E and U indicate position on input side (E) or output side (U) of switching unit (with reference to speech). These circuits are all integrated circuits, making it possible for UC to be on a single printed circuit board. Circuits CDT are samplers having the task of extracting a bit octet relating to a channel of one of the incoming or outgoing PCM groups from one of the PCM groups incoming to matrices ME1, MU1 or outgoing from them; the extraction occurs at an instant established by the controller. Circuits CDT then store the bit octet and supply it to the controller through data bus bd1.

The structure of circuits CDT is described in EP—A—34 776 based on European patent application 81101030.5 by CSELT.

Circuits RTBE and RTBU are full-duplex transceivers whose structure is described in European patent No. 26 931 in the name of CSELT.

These circuits are here used in one direction (from network input towards output) for receiving and transmitting speech channels of PCM groups, and in the other direction for receiving and transmitting the channel for dialogue between controllers. Transceivers RTBE, RTBU and links between contiguous stages of the network and between network and periphery make a band which is at least equal to that of a PCM group available on each link for dialogue channels.

Transceiver RTBE1 receives speech channels of groups A1 . . . A8 from a remote transceiver RTBUp inserted in the peripheral devices on connections between said devices and the first network stage. Transceiver RTBE1 then forwards these speech channels to matrix ME1; in the opposite direction RTBE1 receives routing messages from circuit ITNBD5 and forwards them towards RTBUp. Transceiver RTBU1 receives speech channels from ME1 and forwards them to a second stage transceiver RTBE2, and receives routing messages from RTBE2 and forwards them to ITNBD5. RTBE5 receives speech channels from a fourth stage transceiver RTBU4 and sends them to MU1, and forwards routing messages received from ITNBD1 towards RTBU4. RTBU5 receives speech channels from MU1 and forwards them to transceiver RTBEp inserted in the peripheral devices on interconnections between said devices and the fifth network stage, and receives routing messages from RTBEp which it forwards to ITNBD1.

Circuits TNBD1 and TNBD5 are interface devices which make it possible for the controllers, which operate asynchronously, to carry out dialogue through a synchronous transmissive means such as a PCM link. The structure of circuits like TNBD1 and TNBD5 is described in EP—A—17 988 based on European patent application 80102064.5 by CSELT.

In the present application, circuits TNBD1, TNBD5 and the analogous circuits provided in switching units UCb and UCc of planes PC1 . . . PCn are capable of transmitting and receiving up to a maximum of 16 8-bit words. These 16 words are part of 16 messages consisting of 7 words of which the first is a function code which indicates presence and type of message (e.g. connection orders), the five subsequent words represent the information content and the last word is a control word (e.g. representing the binary sum of the 6 preceding words). Transmission or reception of a complete message will thus occupy 7 frames. Circuits TNDB1 and TNBD5 are connected to controller CTR1a through the data bus, and to circuits ITNBD1 and ITNBD5 through connection $m_1$, $n_1$ and $m_5$, $n_5$ intended to convey a 32-channel PCM group.

Circuits ITNBD1 and ITNBD5 carry out serial/parallel and parallel/serial conversion, as well as the following tasks:

1) Receiving the contents of the virtual dialogue channels associated with groups B1 . . . B8, C1 . . . C16 from transceivers RTBU5 and RTBU1 respectively, and sending said contents on an equal number of PCM channels of the serial flow on lines $m_1$, $m_5$; e.g., the contents of extracted channels is inserted on the even channels of said flow.

2) Transferring to RTBE5 and respectively to RTBE1 the contents of the even channels of a serial input group on connections $n_1$ and $n_5$ for insertion on the virtual channel associated with groups F1' . . . F16' and A1 . . . A8 respectively.

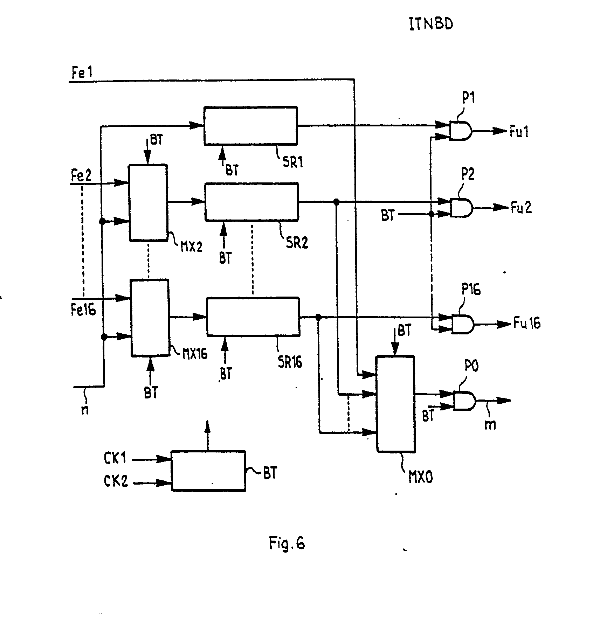

The order number of the channel from which contents will be extracted and on which contents will be inserted is determined by the relation between the 8-kHz synchronism of the frame incoming to the circuit and the frame synchronism of the PCM network in which the circuit is inserted. The order number of the channel used is the same for all groups. The structure of circuit ITNBD will be described below with reference to Figure 6.

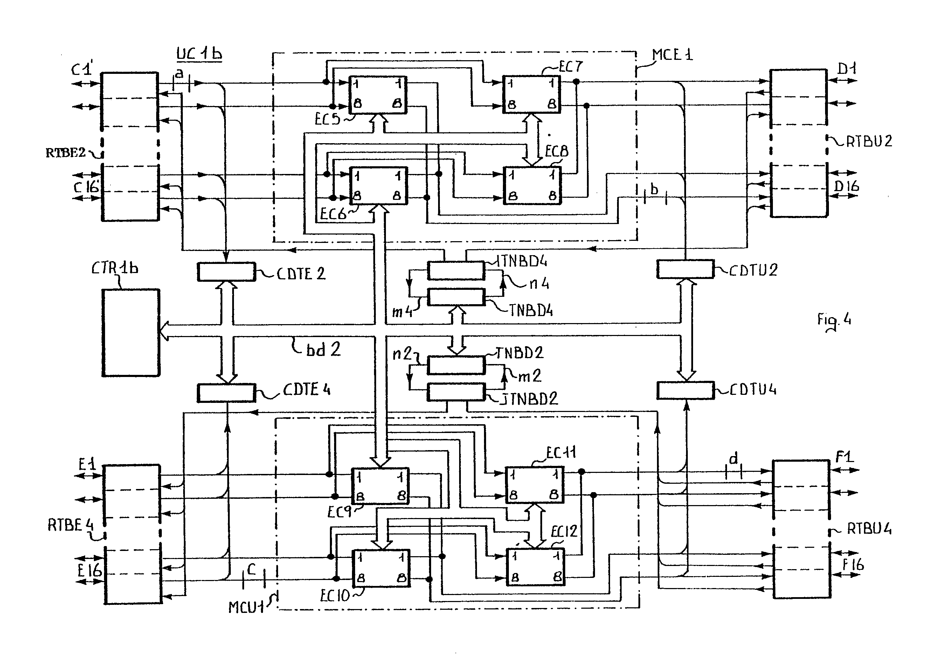

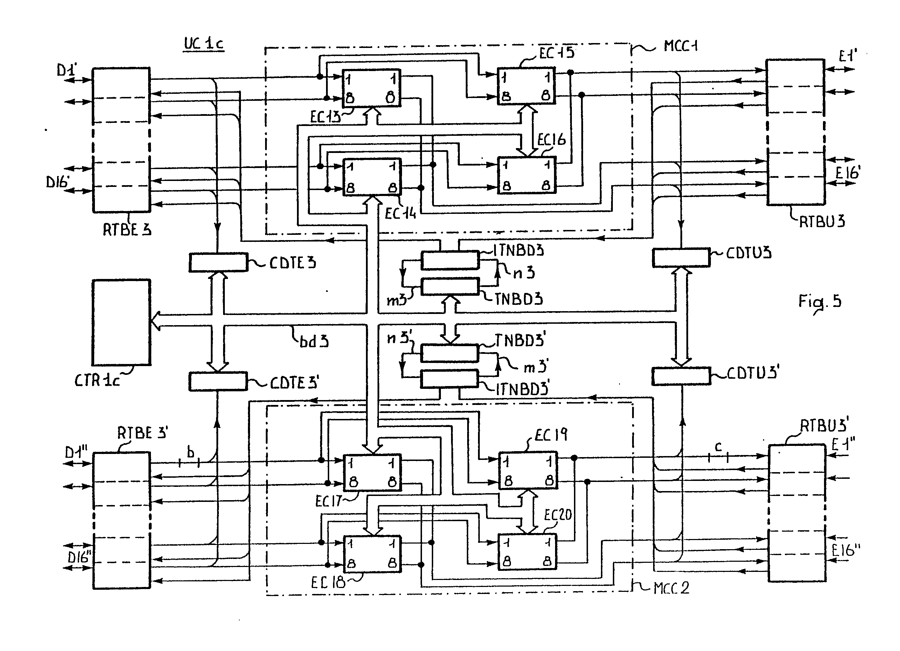

Figures 4 and 5 show the structure of switching units UC1b, UC1c, which is perfectly analogous to that of

UC1a except for the different number of elements which constitute the matrices (four instead of two), with inputs and/or outputs connected in parallel so that the matrices switch 16 groups as described in the aforementioned EP—A—39 948 (CSELT). These elements are designated EC5—EC12 in Figure 4 and EC13—EC20 in Figure 5. Moreover, input/output groups of MCE1 are indicated with C1' . . . C16', D1 . . . D16 (Figure 4), those of MCU1 with E1 . . . E16, F1 . . . F16, those of MCC1 with D1' . . . D16', E1' . . . E16' (Figure 5), and those of MCC2 with D1'' . . . D16'', E1'' . . . E16''. Also in Figures 4 and 5, circuits RTBE, RTBU, CDTE, CDTU, TNBD, ITNBD and lines m, n belonging to the different switching units are indicated with the number of the stage to which they belong. Indices 3 and 3' have been used for the third stage.

The number of the pCM channels handled by individual switching units has been established so as to make it possible for current technology to produce the switching unit using a single replaceable structural element (printed circuit board). Said number has been determined on the basis of the characteristics of the switching matrices adopted (ME, MCE, MCC, MCU, MU) of the circuits for generating virtual channels and for dialogue between controllers (RTB, ITNBD, TNBD), of the ancillary circuits for diagnosis (CDT), and of the commercially available microprocessors (CTR) and associated peripheral circuits, bearing in mind the standard printed circuit board formats such as DIN standard "Double Europe" format.

It should be noted that the organization of switching matrices ME1, MU1, MCE1, MCU1, MCC1, and MCC2 given as an example in Figures 3, 4 and 5 makes it possible to use matrices of even greater capacity (double, for example), should such matrices become available on the market, with the structure of the entire network of Figure 1 remaining unchanged.

The three switching unit types correspond to three different utilizations of the same printed circuit board.

The fact of employing network structures which make intensive and prevalent use of replaceable structural elements of the same type, such as that used here, which elements also make use of a limited number of different component types, provides considerable advantages in terms of production, stocks and maintenance.

Circuits ITNBD and TNBD make it possible to reduce the load on the microprocessor controller considerably, in that such circuits take over the repetitive portion of the dialogue consisting of the storage and formation of the entire message. The use of standard components for serial dialogue would oblige the controllers to follow part of the dialogue thus subtracting resources from other functions.

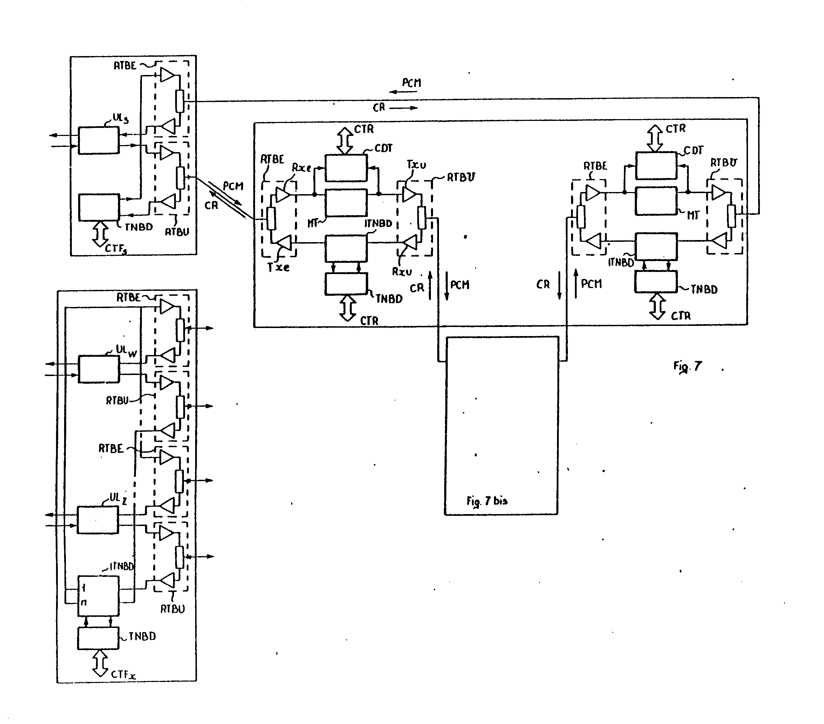

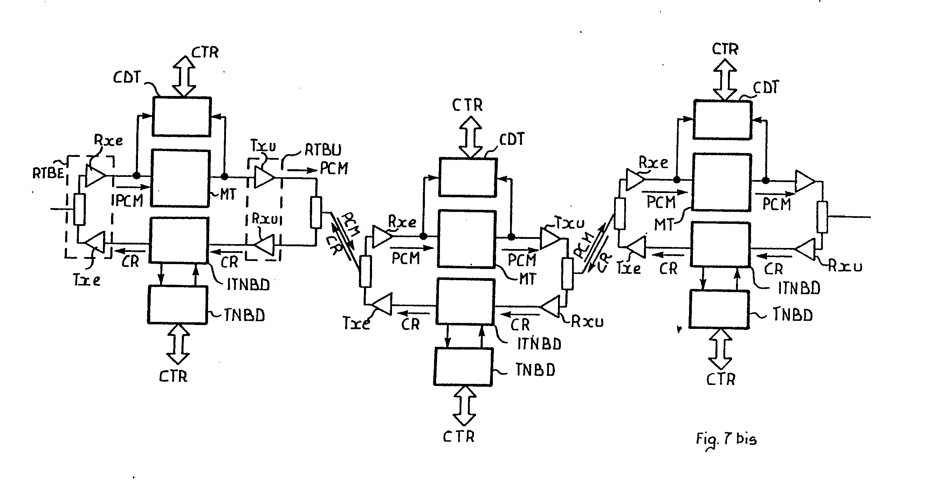

Figure 7 shows a connection through the 5-stage network of Figure 1 in simplified form. In this Figure, receivers and transmitters of circuits RTBE, RTBU of Figure 3 and 5 are indicated with Rxe, Txe, Rxu and Txu, while CDT indicates the set of the two samplers in a stage and MT indicates the stage switching matrix. Alongside the interstage links arrow PCM shows the speech path, while arrow CR indicates the path of routing information. It is thus clear that speech and routing orders travel on the same physical paths but in opposite directions.

The same Figure also shows a group of peripheral units, one of which ULs, is associated with a unit CTFs of telephone control, while units ULw . . . ULy, ULz are all controlled by the same telephone control unit CTFx. All units UL are associated with a pair of transceivers RTBE, RTBU for generation of virtual channels for dialogue with network controllers; moreover, unit ULs is associated with circuit TNBD for exchange of messages on said virtual channels, while the serial/parallel, parallel/serial conversion device ITNBD is also provided for units ULw . . . ULz.

Thanks to the use of circuits TNBD, ITNBD, RTB, the control network can satisfactorily handle a large flow of routing orders, making it possible to use the network for auxiliary functions such as dialogue between the peripheral telephone control units distributed on the network periphery.

In this way, said peripheral telephone control units can be interconnected every time on the basis of a specific routing order sent to the network, thus avoiding the use of permanent connections within the network, which would limit its capacity.

Figure 6 shows a preferred embodiment of a circuit ITNBD, in which 16 incoming or outgoing groups are provided, and the dedicated time channel, i.e. dialogue channel is channel 0. Modifications required for application to a number of groups other than 16, as could be necessary for use in CTFb (Figure 2), are immediate. In Figure 6, the lines which carry dialogue channels incoming and outgoing from ITNBD are indicated with Fe1 . . . Fe16, Fu1 . . . Fu16, while m, n indicate lines which are analogous to lines $m_1$ . . . $m_5$, $n_1$ . . . $n_5$ of Figures 3—5.

The circuit consists of 16 8-bit shift registers SR1, SR2 . . . SR16; inputs of 15 of these, and more precisely those indicated with SR2 . . . SR16, are connected with incoming lines Fe2 . . . Fe16 through 2-input multiplexers MX2 . . . MX16, which have a second input connected to line n; the outputs of the same registers are connected to outgoing lines Fu1 . . . Fu16 through AND gates P1 . . . P16 and to an equal number of inputs of a multiplexer MX0, which has a sixteenth input connected to line Fe1 and an output connected through AND gate P0 to line m.

Register SR1 has an input connected to line n and output connected through AND gate P1 to line Fu1.

A time base BT obtains control signals for multiplexers MX0, MX2 . . . MX16 and for registers SR1 . . . SR16, as well as enabling signals for the same registers and for gates P0 . . . P16, from bit synchronism signal CK1 at 2.048 MHz and frame synchronism signal CK2 at 8 kHz. In particular, in the time allotted to channel 0 (time slot 0) multiplexer MX0 connects output m to the input connected to Fe1, multiplexers MX2 . . . MX16 connect register inputs to lines Fe2 . . . Fe16, the registers are all enabled for shifting and gates P0 . . . P16 are enabled.

For the rest of the frame, multiplexers MX2 . . . MX16 connect registers SR2 . . . SR16 to line $n$ and gates P1 . . . P16 are disabled. Furthermore, in even time slots (2, 4 . . . 30) registers SR2 . . . SR16 are enabled in succession, multiplexer MX0 connects outputs of said registers in succession to its output and gate P0 is again enabled to transfer register contents to line $m$.

At time slot 0 of each frame thus the contents of channel 0 of group Fe1 pass to $m$, the contents of channel 0 of groups Fe2 . . . Fe16 are loaded in SR2 . . . SR16, and contents of channel 0 of PCM flow on $n$ are loaded in SR1. At the same time, the contents of registers SR1 . . . SR16, loaded respectively in time slots 0, 4 . . . 30 of the preceding frame, are emitted on lines Fu1 . . . Fu16.

In time slots 2, 4 . . . 30, registers SR2 . . . SR16 respectively load the contents of the channels of the PCM flow on $n$, and that which was loaded at time slot 0 of the same frame is emitted on line $m$ through MX0.

We will now describe operation of the control network for diagnosis and routing.

We will first consider routing, and connection in particular. The routing order emitted by a peripheral telephone control unit will contain in the function code the information that a connection is to be made, and in the five subsequent words, the information concerning the network input channel and that concerning the network output channel and group. As the dialogue is of the associated type, the identity of the incoming group is always univocally determined by the identity of the dialogue channel, even if transmission is in the opposite direction.

It will be supposed by way of example that the incoming channel is channel $x$ of group A1 (Figure 3) and that the outgoing channel is channel $y$ of B8. The message will thus be emitted by CTFa (Figure 2) on the channel chosen in the virtual group available on the line conveying group B1.

Through transceivers RTBEp and RTBU5 (Figure 3), the first word of this message reaches ITNBD1 which inserts it in a suitable channel of the PCM flow transmitted on $m_1$ and forwards it to TNBD1. The latter recognize that the message has arrived through the procedures described in the aforementioned EP—A—17 988, application 80102064.5 by CSELT, and stores the octet on the channel. The same operation is repeated for the six subsequent frames. After receiving the seven octets, TNBD1 activates the INTERRUPT output which is used by the local controller CTR1a to transfer the message from the memory of TNBD1 to its own data store through bus bd1.

CTR1a checks that the message is correct by using the last octet of the message itself. The same check is also carried out in the successive stages. It will be supposed below that the messages are received correctly; the contrary situation will be exmined with reference to the diagnosis procedures.

CTR1a locates a connection path between the first and second stages on the basis of the engagement of the interstage links and, if necessary, applying known algorithms to minimize transit delay. Once a connection path has been found, CTR1a forwards the connection order to ME1 through bus bd1 and checks execution through circuits CDTE1 and CDTU1.

It is assumed that the connection order concerns EC1 and causes switching of channel $x$ of A1 (input 1 of EC1) on channel $a$ of group C16 (output 8 of EC1) connected to input 1 of matrix MCE1 belonging to switching unit UC1b (Figure 1) of plane PC16. A routing through EC1 having been selected, input 1 of EC2, connected in parallel with EC1, is disabled.

When switching has been carried out, CTR1a modifies the routing order received, replacing the identity of the input channel with that of the output channel of the stage. The rest of the information content of the connection message (network output channel and group) remains unchanged.

The modified order is sent to TNBD1 through data bus bd1; TNBD1 stores this order, inserts it in the suitable channel of PCM flow transmitted on $n_1$, and forwards it to ITNBD1 which in turn transfers it to the virtual channel of connection F16' between the fifth and fourth stage, corresponding to connection C16 on which speech channel $a$ is forwarded.

Through RTBE5, RTBU4, ITNBD2, TNBD2 and bd2 (Figure 4) the new message reaches CTR1b which, from the identity of the dialogue channel, recognizes a connection order concerning the second stage, and in particular channel $a$ of C1'. CTR1b locates a free channel from amongst the 512 outputs of MCE1 using the same procedure followed by CTR1a.

We will assume by way of example that the choice concerns channel $b$ of group D16, which is connected to input 1 of matrix MCC16 of UC8c (Figure 1). This input group of MCC16 corresponds to group D1'' of Figure 5. Controller CTR1b (Figure 4) selects in MCE1 the element which is to carry out the connection, in this case EC5; the connection concerns in particular input 8 and output 8 of EC5, so that CTR1b must disable channel $b$ of output 8 of EC6, whose outputs are connected in parallel with those of EC5. After checking that switching has been carried out, the relative data are stored in CTR1b, which forwards the new message to CTR8c through bd2, TNBD2, ITNBD2, RTBE4 and devices corresponding to RTBU3', ITNBD3', TNBD3' and bd3 (Figure 5).

With the network organization described, routing (as far as the group is concerned) is univocal from this point on: in fact, to reach output group B8 (Figure 1), it is necessary to access matrix MU1, which can be reached from MCC16 only through output 1 of the same matrix (corresponding to group E1'', Figure 5, and connected to input E16 of MCU1) and output 1 of MCU1 (group F1, Figure 4). Consequently, once the input channel to which the message refers is recognized, CTR8c can only select the channel within the first group (channel $c$, for example), make the connection and prepare the new message for CTR1b (Figure 1). The latter recognizes a connection order for the fourth stage and selects a channel (channel $d$, for example) in output group F1, which corresponds to group F16' at the input of MU1. After making the connection between channel *c* E16 and *d* of F1 through EC12, CTR1b forwards the new message to CTR1a, which in turn makes MU1 connect channel *d* of incoming group F16' and channel *y* of outgoing group B8. This connection concerns input 8 and output 8 of EC4.

At this point the connection within the network is set up a confirmation message may be provided for the connection set up and is routed by CTR1a to the peripheral telephone control unit to which is connected group B8, using the virtual channel associated with connection A8, dual of B8.

Disconnections are carried out following the same procedures described for connection. The relevant message is emitted by the peripheral telephone control unit which has emitted the connection message (CTFa, Figure 2, in the example) and contains in its data field the identity of the incoming channel relating to the path to be released (channel *x* of A1). The message is received by controller CTR1a of UC1a (Figure 3), which looks in its data store for the output channel and group associated with the input channel and group retrieved on the basis of the message received. In this case the output channel is channel *a* and the group is group 16 CTR1a carries out disconnection on matrix ME1, diagnoses disconnection with CDTU1, modifies the data field of the message by replacing the identity of channel *x* with that of channel *a*, and transmits the disconnection message towards second stage controller CTR1b on the dialogue channel. The procedure is then repeated in an analogous manner up to controller CTR1a for the fifth stage, which can forward the message confirming that disconnection has been carried out towards the peripheral telephone control unit connected to it.

As far as diagnosis is concerned, two distinct procedures are provided.

The first concerns check of the connections set up within each switching unit. This is carried out by controllers at each stage through circuits CDTE and CDTU. In particular, an octet of the input channel concerned is extracted through circuit CDTE and compared with the same octet extracted by CDTU from the output channel of the matrix, making allowance for delay in terms of number of frames introduced by transit through the matrix. Several connection test procedures are possible. For example, a connection may be tested immediately after being set up all or part of the connections set up can be cyclicly checked, or both tests may be carried out assigning priority criteria which will be defined during design. It is generally preferred to give top priority to the connection which has just been set up.

The second procedure concerns check of circuits ITNBD, RTBU, RTBE and the physical connection lines between network stages and between network and periphery. This procedure is carried out by TNBD exploiting the control word in each message and the fact that, given the operation procedures envisaged for circuit TNBD (described in EP—A—17 988 based on European patent application 80102064.5, CSELT), the message is generally followed by a "rest" word having a predetermined bit configuration.

Thus, each time that TNBD recognizes on the basis of the control word that a message is not correct, it must still check whether a simple transmission error occurred or if the line has been interrupted between the transmitting and receiving TNBD's. In fact, a line interruption simulates messages which, being due to a failure, cannot in general present the correct control word.

To this end, a check is carried out to see if the "rest" word is present in the line. If it is, this shows that there was simply a transmission error due to a disturbance of the units along the connection. In these conditions, the controller concerned by the message does not take the steps necessary to set up the connection and can start up diagnosis procedures by sending a suitable alarm message to the upstream controller or to the peripheral telephone control unit, depending on the situation. To do so, it uses the virtual channel on the line connecting its stage with that upstream or with the periphery.

If, on the other hand, a word differing from the "rest" word is present, there has been an interruption of the line. In this case, the controller which has received the wrong message sends a suitable message advising of the interruption to the upstream controllers so that the latter can isolate the interrupted line and inform the peripheral telephone control unit.

Checking the integrity of the lines makes it possible not only to recognize failures, but also to keep constant control over the equipment situation of the interstage links and of the links with the periphery.

Obviously, the diagnosis procedure which uses virtual channels also provides diagnostic information for the physical paths on which speech channels are transmitted. Since the routing messages on a given physical path are independent of the speech transmitted on the same path, diagnosis is not linked to the presence of traffic.

The simultaneous use of the two diagnosis procedures makes it possible to ensure a practically complete coverage of the entire network circuit construction.

Coverage of any failures of controller processing units (microprocessor, memories) makes use of autodiagnosis methods of known type (memory parity checks, software traps).

The diagnosis procedures hitherto described are compatible with carrying out global procedures of known type for network supervision, carried out by peripheral telephone control units which use the switching network.

Again where the connection procedure is concerned, it may occur that the controller of a stage cannot forward the connection message towards the subsequent stage because it cannot find a free connection channel towards said subsequent stage (blocking).

With reference to the example described, it is supposed that the blocking involves the third stage, or in other words that it is CTR8c (Figure 1) which cannot find a channel which is free towards the fourth stage, to be connected with channel *b* of D1''.

CTR8c modifies the connection message for channel *b* by leaving the data field unchanged and inserting as function code that relating to the "routing blocking", and transmits the message to CRT1b (which had originated it) through the virtual dialogue channel available on the link between the third and second stages.

After receiving the blocking message for channel *b* of output 16 of matrix MCE1, CTR1b locates in memory the connection data relating to said output channel. After reconstructing the connection data (channel *a* of C1'—input 1 of MCE1 with channel *b* of D16—output 16 of MCE1), it disconnects the output channel of MCE1, and reroutes channel *a* towards a third stage matrix, excluding the link used in the first attempt.

The number of rerouting attempts within a switching plane PC may be selected during design. Once this threshold is exceeded, the blocking message is sent back to the first stage controller (in this case CTR1a) which had given rise to the connection order; CTR1a will then proceed to reroute the connection on a plane PC other than PC16.

The preceding description clearly shows the advantage which the invention provides with respect to prior art in terms of modularity, flexibility of application, distribution of functions and performance.

In particular, the present invention makes it possible to provide network structures which have capacities ranging from a few hundreds to several hundred thousand PCM channels with a number of time stages varying from one (network consisting of a single 8×8 or 16×16 matrix) to seven, using a single type of construction module. For example, it would be possible to have a three stage network consisting of a single switching plane with a capacity of 8192 channels. For a given number of stages, the capacity may be varied by changing the number of matrices and the interstage connections. For example, halving the number of matrices in a switching plane and connecting the first and second output groups of a matrix MCE to the first and second input groups of a MCC matrix yields switching planes 4096 channels; a five-stage network with 32 central planes can be obtained by using matrices ME with 16 input groups and 32 output groups, and matrices MU with 32 input groups and 16 output groups. In any case, high efficiency is always maintained in the ratio between hardware employed and the number of channels equipped.

A seven-stage network is also possible, though problems of transit delays and routing times make such a network inconvenient. In any case, however, the folded switching units would include respectively matrices of the first and seventh stages, of the second and sixth stages and of the third and fifth stages, the fourth stage unit being again unfolded. Furthermore, the network can adapt itself easily to technological developments in the integrated elements which make it up, and provides a considerable control distribution so as to optimize the ratio between installed processing power in all equipment situations and the number of channels served.

The presence of a local network controller on each individual switching unit makes the network truly self-routing, in that the connection of the PCM channel within the network is searched independently by the controller of the switching unit involved in each stage. In this way, the peripheral telephone control units are completely relieved of the task of locating a connection path within the network. The use of special integrated circuits for dialogue between switching unit controllers relieves the microprocessor of dialogue management and provides actuation time such that a large number of connection requests can be handled expeditiously. The constructional folding of the network, thanks to which it is possible to send routing messages through virtual channels, makes it also possible to separate these messages completely from speech as far as the physical path used is concerned.

This gives maximum flexibility in forwarding commands: in particular, rather than using a virtual channel for each group, it would be possible to have a virtual channel for routing messages relating to several groups, or even a common channel routing signalling, if it were desired to exploit certain advantages offered by this type of signalling.

In any case, the use of the virtual channel for forwarding routing messages makes it possible to have standard PCM speech channels in all network areas; network components may thus be general-purpose, and it is not necessary to introduce interface circuits for format conversion.

The blocking characteristics of the network are such as to ensure negligible losses in any equipment situation for the maximum envisaged traffic levels; thanks to the use of controllers distributed on the switching units, the network can automatically find alternative routing paths in the event of blocking or internal failure without depending on the intervention of the peripheral telephone control units.

Transit delay on the PCM channels switched by the network is minimized by the use of strategies which can be applied by each switching unit network controller; the use of the specialized ancillary circuits for diagnosis makes it possible for the functions of diagnosis, failure localization and reconfiguration to be extended to the level of the individual constructional units and thus cover failures involving the connection lines between the individual basic modules making up the network.

The switching unit equipped with a controller and ancillary circuits for diagnosis is capable of performing autodiagnosis and configuration identification procedures, thus relieving the telephone exchange supervision organs of the heavy burdens afforded by these tasks.

Again thanks to the use of microprocessors for the local network controllers, by using different application programmes for the controllers of each unit and through suitable selection of the number and structure of central switching planes PC, it is possible to choose the ideal compromise between actuation times, blocking probability, diagnosis and network cost, and thus cover the entire range of possible

# 0 097 360

telephone switching applications (transit, urban, local or mixed exchanges). For example, network structures with a limited number $n$ of internal planes make possible a reduction in the number of switching units employed and hence of cost; however, a larger number of possible routing attempts must be provided in the light of the higher blocking probability. This strategy will obviously give rise to longer actuation times in the switching network. On the contrary, with a larger number of planes it is possible to reduce the number of routing attempts given that the blocking probability is intrinsically low; short actuation times are thus possible.

Moreover, with a given equipment situation, it is possible to modify the controller programmes to provide a network with a sophisticated diagnosis to the detriment of actuation speed or, vice versa, a network with less sophisticated diagnosis but which executes commands from the peripheral control units more quickly, as could be required if the exchange must handle new services (data networks for example).

## Claims

1. Self-routing modular PCM switching network with several time division stages, which belongs to a telephone exchange with peripheral telephone control units (CTFa ... CTFc) distributed on the network periphery and comprises folded modular switching units (UC1a ... UC256a; UC1b ... UC16b; UC1c ... UC8c) basically consisting of a local network controller in the form of a microprocessor (CTR1a ... CTR256a, CTR1b ... CTR16b, CTR1c ... CTR8c) and of integrated circuit switching matrices (ME1 ... ME256, MU1 ... MU256, MCE1 ... MCE16, MCU1 ... MCU16, MCC1 ... MCC16) with microprocessor-compatible control, each switching unit including a pair (ME1, MU1, ... ) of the matrices controlled by the same local controller (CTR1a ... CTR8c) such that each switching unit incorporates both the input link and the corresponding output link from and to the contiguous stage or from and to the network periphery, and further of integrated ancillary circuits for diagnosis (CDTE1 ... CDTE5, CDTU1 ... CDTU5), the local controller (CTR1a ... CTR8c) of each switching unit (UC1a ... UC8c) being connected to the controllers (CTR1a ... CTR8c) of a plurality of units belonging to contiguous stages and/or to the distributed peripheral telephone control units (CTFa ... CTFc) for the exchange of network control messages through the same PCM links which convey speech between contiguous stages and from and to the network periphery, characterized in that each matrix (ME1 ... MCC16) and each one of periphery units (UL1 ... UL2048) is associated with integrated circuits (RTBE1 ... RTBE5, RTBU1 ... RTBU5) providing, one or more of said links, a number of channels which are dedicted time channels not used for speech but for transmission of said messages in a direction opposite to that of speech transmission on the same links, and integrated ancillary circuits (TNBD1 ... TNBD5, ITBND1 ... ITNBD5) for exchange of said messages using said dedicated time channels.

2. Network according to claim 1, characterized in that the integrated circuits (RTBE, RTBU) providing the dedicated time channels together with said links, provide a band equal at least to that of an entire PCM group, for control messages on each said link.

3. Network according to claims 1 or 2, characterized in that said dedicated time channels include a dedicated time channel for each PCM link.

4. Network according to any of claims 1 to 3, characterized in that the integrated circuits (RTBE1 ... RTBU5) providing said dedicated time channel include a full-duplex transceiver (RTBE1 ... RTBE5) connected to the speech input of the matrix (ME1 ... ME16) or respectively of the periphery unit (UL1 ... UL2048), and a full-duplex transceiver (RTBU1 ... RTBU5) connected to the speech output of the same matrix (ME1 ... MCC16) or of the same periphery unit (UL1 ... UL2048), the input transceiver (RTBE1 ... RTBE5) routing speech towards the matrix or towards the periphery unit and forwarding messages relating to network control, which it receives from said integrated ancillary circuits (ITNBD1 ... TNBD5) for message exchange, towards the output transceiver (RTBU1 ... RTBU5) associated with a matrix of the adjacent stage or with a periphery unit, and the output transceiver (RTBU1 ... RTBU5) forwarding speech towards the input transceiver associated with a matrix (ME1 ... MCC16) of one of the adjacent stages or with one of the periphery units (UL1 ... UL2048), anf forwarding the messages which it receives from the controller of said matrix of the adjacent stage or from the peripheral telephone control unit (CTFa ... CTFc) associated with said periphery unit, towards the integrated ancillary circuits (ITNBD1 ... TNBD5) for the message exchange.

5. Network according to any of claims 1 to 4, characterized in that the integrated ancillary circuits (ITNBD1 ... TNBD5) for the message exchange associated with the switching units (UC1a ... UC8c) include:

—an interface device (TNBD1 ... TNBD5) capable on one side of asynchronously receiving one or more messages consisting of a plurality of words from the controller (CTR1a ... CTR8c) of the switching unit (UC1a ... UC8c), of memorizing said message(s) and of inserting the words of said message(s) on an equal number of channels of a plurality of frames of a PCM flow to be inserted into the dedicated time channels, and on the other side of receiving from said dedicated time channels one or more messages organized in a PCM flow and consisting of a plurality of words, of memorizing said words until complete reception of the message(s) and of supplying them asynchronously to the controller (CTR) associated with it;

—a device carrying out serial-parallel and parallel-serial conversion (ITNBD1 ... ITNBD5) having a first input and a first output connected respectively to the receiving side (Rxu) of the output transceiver

11

(RTBU1 . . . RTBU5) and to the transmitting side (Txe) of the input transceiver (RTBE1 . . . RTBE5) and a second input and a second output connected to the interface device (TNBD1 . . . TNBD5), and capable of extracting in parallel, through the output transceiver and from the dedicated time channels associated with the matrix output groups, the content of said channels and of supplying such content in the form of a PCM frame to the corresponding interface device (TNBD1 . . . TNBD5), and capable of distributing the messages in a single PCM flow coming from said interface device (TNBD1 . . . TNBD5) among the dedicated time channels for dialogue between controllers associated with all matrix input groups, through the input transceiver.

6. Network according to claim 5, characterized in that said devices carrying out serial/parallel and parallel/serial conversion (ITNBD1 . . . ITNBD5) include a plurality of shift registers (SR1 . . . SR16) equal in number to the number of input or output groups of a matrix, and in that the first register (SR1) has its input connected to the line (n) which conveys the PCM flow transmitted by the corresponding interface device (TNBD1 . . . TNBD5) and its output connected to the first matrix input group, while the others (SR2 . . . SR16) have their input connected to the output of a 2-input multiplexer (MX2 . . . MX16) which has a first input connected to one of the matrix PCM output groups and the other input connected to the line (n) which conveys the PCM flow transmitted by the interface device (TNBD1 . . . TNBD5), the outputs of said other registers being connected both to the matrix input groups through AND gates (P2 . . . P16) and to an equal number of inputs of a further multiplexer (MXO) which has a further input connected to the first output group of the matrix and an output connected to the line (m) which conveys the information carried by the dedicated time channels for controller dialogue to the interface device (TNBD1 . . . TNBD5).

7. Network according to claim 6, characterized in that said devices carrying out serial/parallel and parallel/serial conversion also include a time base (BT) which, on the basis of bit and frame synchronisms of a PCM flow, generates enabling and command signals in each PCM flow frame for said shift registers (SR1 . . . SR16), said multiplexers (MXO . . . MX16) and said AND gates (P1 . . . P16) in such a way that in the time reserved to the dedicated time channels for controller dialogue the dialogue information in said frame is sampled from the matrix output groups, and the dialogue information supplied by the interface device (TNBD1 . . . TNBD5) and stored in the registers in the preceding frame is transferred to the input groups; the multiplexers (MX2 . . . MX16) connected to the inputs of the shift registers (SR2 . . . SR16) are enabled in sequence to transfer to the registers the dialogue information supplied in that frame by the interface device (TNBD1 . . . TNBD5), and the multiplexer (MXO) connected to the output of registers (SR1 . . . SR16) transfers in sequence the information stored by said registers in the dedicated time dialogue channel time of the preceding frame to the interface device.

8. Network according to any of claims 1 to 7, characterized in that said interface devices (TNBD) permit a diagnosis of the devices performing serial/parallel and parallel/serial conversion (ITNBD), of circuits (RTBE, RTBU) providing the dedicated time channels, and of the links on which the dedicated time channels are provided and on which the speech information is conveyed.

9. Network according to claim 5, characterized in that the ancillary integrated circuits (ITNBD1 . . . TNBD5) for the message exchange associated with periphery units (UL1 . . . UL2048) include only the interface devices (TNBD1 . . . TNBD5) in the case of periphery units controlled individually by one of the peripheral telephone control units (CTFa . . . CTFc) and include both the interface devices (TNBD1 . . . TNBD5) and the devices carrying out serial/parallel and parallel/serial conversion (ITNBD1 . . . ITNBD5) in the case of periphery units controlled in groups by a single peripheral telephone control unit.

10. Network according to any of claims 1 to 9, characterized in that such matrices (ME1 . . . ME256, MU1 . . . MU256) of the switching units (UC1a . . . UC256a) that relate to the extreme stages of the network respectively carry out an expansion or a concentration of their input groups.

11. Network according to any of claim 1 to 10, characterized in that each of the switching units (UC1a . . . UC8c) is physically contained in a single withdrawable and replaceable standard printed circuit board which constitutes the modular structural element of the network.

**Patentansprüche**

1. Modulares PCM-Koppelnetz mit automatischer Leitwegwahl und mit mehreren Zeitteilungsstufen, das zu einer Fernsprech-Vermittlungsstelle mit an der Peripherie verteilten peripheren Fernsprechsteuereinheiten (CTFa, . . ., CTFc) gehört und gefaltete modulare Schalteinheiten (UC1a, . . ., UC256a; UC1b, . . ., UC16b; UC1c, . . ., UC8c) umfaßt, die im wesentlichen aus einem ötlichen Koppelnetz-Steuergerät in Form eines Mikroprozessors (CTR1a, . . ., CTR256a, CTR1b, . . ., CTR16b, . . ., CTR1c, . . ., CTR8c) aus eine mikroprozessorkompatible Steuerung aufweisenden Schaltmatrizen (ME1, . . ., ME256, MU1, . . ., MU256, MCE1, . . ., MCE16, MCU1, . . ., MCU16, MCC1, . . ., MCC16) in Form integrierter Schaltkreise, wobei jede Schalteinheit ein Paar (ME1, MU1) der Martizen enthält, die vom selben örtlichen Steuergerät (CTR1a, . . ., CTR8c) gesteuert werden, derart, daß jeder Schalteinheit sowohl die Eingangsverbindung als auch die entsprechende Ausgangsverbindung von der und zur angrenzenden Stufe oder von der und zur Koppelnetz-Peripherie enthält, und außerdem aus integrierten Diagnose-Hilfsschaltungen (CDTE1, . . ., CDTE5; CDTU1, . . ., CDTU5) bestehen, wobei das örtliche Steuergerät (CTR1a, . . ., CTR8c) jeder Schalteinheit (UC1a, . . ., UC8c) mit den Steuergeräten (CTR1a, . . ., CTR8c) einer Vielzahl von Einheiten, die zu benachbarten Stufen und/oder zu den verteilten peripheren Fernsprechsteuereinheiten (CTFa, . . ., CTFc) gehören, für den Austausch von Koppelnetz-Steuernachrichten über die selben PCM-Verbindungen, die Sprache zwischen benachbarten Stufen und von der und zur Koppelnetz-Peripherie befördern, verbunden ist, dadurch gekennzeichnet, daß jede Matrix (ME1, . . ., MCC16) und jede Einheit von Peripherieeinheiten (UL1, . . ., UL2058) integrierten Schaltungen (RTBE1, . . ., RTBE5, RTBU1, . . ., RTBU5) zugeordnet ist, die auf einer oder mehreren dieser Verbindungen eine Anzahl von Kanälen schaffen, die spezifizierte Zeitkanäle sind und nicht für Sprache, sondern für das Senden der Nachrichten in einer Richtung entgegengesetzt der der Sprachübertragung auf diesen Verbindungen gebraucht werden, und weiterhin integrierten Hilfsschaltungen (TNBD1, . . ., TNBD5, ITBND1, . . ., ITBND5) für den Austausch der Nachrichten unter Verwendung der spezifizierten Kanäle zugeordnet ist.

2. Koppelnetz nach Anspruch 1, dadurch gekennzeichnet, daß die die spezifizierten Zeitkanäle schaffenden integrierten Schaltungen (RTBE, RTBU), zusammen mit den Verbindungen, für Steuernachrichten auf jeder Verbindung ein Band bereitstellen, das wenigstens gleich dem eines gesamten PCM-Bündels ist.

3. Koppelnetz nach Anspruch 1 oder 2, dadurch gekennzeichnet, daß die spezifizierten Zeitkanäle einen spezifizieren Zeitkanal für jede PCM-Verbindung enthälten.

4. Koppelnetz nach einem der Ansprüche 1 bis 3, dadurch gekennzeichnet, daß die die spezifizierten Zeitkanäle schaffenden integrierten Schaltungen (RTBE1, . . ., RTBU5) einen Vollduplex-Senderempfänger (RTBE1, . . ., RTBE5), der mit dem Sprecheingang der Matrix (ME1, . . ., ME16) bzw. der Peripherieeinheit (UL1, . . ., UL2048)) verbunden ist, sowie einen Vollduplex-Senderempfänger (RTBU1, . . ., RTBU5), der mit dem Sprechausgang der selben Matrix (ME1, . . ., MCC16) bzw. der selben Peripherieeinheit (UL1, . . ., UL2048) verbunden ist, enthalten, wobei der Eingangs-Senderempfänger (RTBE1, . . ., RTBE5) Sprache zur Matrix oder zur Peripherieeinheit leitet und sich auf die Koppelnetzsteuerung beziehenden Nachrichten, die er von der integrierten Hilfsschaltungen (ITNBD1, . . ., ITNBD5) für den Nachrichtenaustausch empfängt, zum Ausgangs-Senderempfänger (RTBU1, . . ., RTBU5), der einer Matrix der benachbarten Stufe oder eine Peripherieeinheit zugeordnet ist, leitet, und der Ausgangs-Sendeempfänger (RTBU1, . . ., RTBU5) Sprache zum einer Matrix (ME1, . . ., MCC16) einer der benachbarten Stufen oder einer der Peripherieeinheiten (UL1, . . ., UL2048) zugeordneten Eingangs-Senderempfänger leitet und die Nachrichten, die er vom Steuergerät der Matrix der benachbaren Stufe oder von der peripheren Fernsprechstereinheit (CTFa, . . ., CTFc), die dieser Peripherieeinheit zugeordnet ist, empfängt, zu den integrierten Hilfsschaltungen (ITNBD1, . . ., TNBD5) für den Nachrichtenaustausch leitet.

5. Koppelnetz nach einem der Ansprüche 1 bis 4, dadurch gekennzeichnet, daß die den Schalteinheiten (UC1a, . . ., UC8a) zugeordnetintegrierten Hilfsschaltungen (ITNBD1, . . ., TNBD5) für den Nachrichtenaustausch folgende Einzelschaltungen enthalten:

—eine Anpassungsvorrichtung (TNBD1, . . ., TNBD5), die einerseits asynchron vom Steuergerät (CTR1a, . . ., CTR8c) der Schalteinheit (UC1a, . . ., UC8c) eine oder mehrere aus einer Vielzahl von Wörtern bestehende Nachricht(en) empfangen kann, diese Nachricht(en) speichern kann und die Wörter der Nachricht(en) auf einer gleichen Anzahl von Kanälen einer Vielzahl von Rahmen eines PCM-Flusses, der in die spezifizierten Zeitkanäle eingesetzt werden soll, einsetzen kann, und andererseits von diesen spezifizierten Zeitkanälen eine oder mehrere in einem PCM-Fluß organisierte und aus einer Vielzahl von Wörtern bestehende Nachricht(en) empfangen kann, diese Wörter bis zum vollständigen Empfang der Nachricht(en) speichern kann und sie asynchron an das ihm zugeordnete Steuergerät (CTR) liefern kann;

—eine Serien/Parallel- und Parallel/Serien-Umsetzungen durchführende Vorrichtung (ITNBD1, . . ., ITNBD5) mit einem ersten Eingang und einem ersten Ausgang, die mit der Empfangsseite (Rxu) des Ausgangs-Senderempfängners (RTBU1, . . ., RTUB5) bzw. mit der Sendeseite (Txe) des Eingangs-Senderempfängers RTBE1, . . ., RTBE5) verbunden sind, sowie mit einem zweiten Eingang und einem zweiten Ausgang, die mit der Anpassungsvorrichtung (TNBD1, . . ., TNBD5) verbunden sind, wobei die Vorrichtung parallel über den Ausgangs-Senderempfänger und von den den Matrix-Ausgangsbündeln zugeordneten spezifizieren Zietkanälen den Inhalt dieser Kanäle extrahieren kann und ihn in Form eines PCM-Rahmens an die entsprechende Anpassungsschaltung (TNBD1, . . ., TNBD5) liefern kann, und außerdem die Nachrichten in einem einzigen PCM-Fluß, der von der Anpassungsvorrichtung (TNBD1, . . ., TNBD5) kommt, unter den spezifizierten Zeitkanälen für den Dialog zwischen den allen Matrix-Eingangsbündeln zugeordneten Steuergeräten durch den Eingangs-Senderempfänger verteilt.

6. Koppelnetz nach Anspruch 5, dadurch gekennzeichnet, daß die die Serien/Parallel- und die Parallel/Serien-Umsetzung durchführenden Vorrichtungen (ITNBD1, . . ., ITNBD5) eine Mehrzahl von Schieberregistern (SR1, . . ., SR16) enthalten, deren Anzahl gleich der der Eingangsbündel oder Ausgangsbündel einer Matrix ist, und daß erste Register (SR1) mit seinem Eingang an die Leitung (n) angeschlossen ist, die den von der entsprechenden Anpassungsvorrichtung (TNBD1, . . ., TNBD5) gesendeten PCM-Fluß führt, und mit seinem Ausgang an das erste Matrix-Eingangsbündel angeschlossen ist, während die anderen Register (SR2, . . ., SR16) mit ihrem Eingang an den Ausgang eines Zwei-Eingangs-Multiplexers (MX2, . . ., MX16) angeschlossen sind, dessen erster Eingang an eines der Matrix-PCM-Ausgangsbündel und dessen zweiter Eingang an die Leitung (n), die den von der Anpassungsvorrichtung (TNBD1, . . ., TNBD5) gesendeten PCM-Fluß führt, angeschlossen ist, während die Ausgänge der anderen Register sowohl mit den Eingangsbündeln der Matrix über UND-Glieder (P2, . . ., P16) als auch mit einer gleichen Anzahl von Eingängen eines weiteren Multiplexers (MXO) verbunden sind, der mit einem weiteren Eingang mit dem ersten Ausgangsbündel (Fe1) der Matrix und mit einem Ausgang mit der Leitung (m) verbunden ist, die die

## 0 097 360

von den spezifizierten Zeitkanälen für den Steuergerätedialog geführte Information zur Anpassungsvorrichtung (TNBD1, . . ., TNBD5) bringt.

7. Koppelnetz nach Anspruch 6, dadurch gekennzeichnet, daß die die Serien/Parallel- und die Parallel/Serien-Umsetzung durchführenden Vorrichtungen weiterhin einen Zeitgeber (BT) enthalten, der auf der Basis von Bit- und Rahmensynchronismen eines PCM-Flusses Ingangsetz- und Befehlssignale in jedem PCM-Fluß-Rahmen für die Schieberegister (SR1, . . ., SR16), die Multiplexer (MX0, . . ., MX16) und die UND-Glieder (P1, . . ., P16) derart erzeugt, daß in der für den spezifizierten Zeitkanal zum Steuergerätedialog reservierten Zeit die Dialoginformation in diesem Rahmen von den Matrix-Ausgangsbündeln abgetastet wird, und die Dialoginformation, die von der Anpassungsvorrichtung (TNBD1, . . ., TNBD5) geliefert und in den Registern im vorhergehenden Rahmen gespeichert wird, zu den Eingangsbündeln gesendet wird; und daß die mit den Eingängen der Schieberegister (SR2, . . ., SR16) erbundenen Multiplexer (MX2, . . ., MX16) aufeinanderfolgend in Gang gesetzt sind, um zu den Registern die in diesem Rahmen von der Anpassungsvorrichtung (TNBD1, . . ., TNBD5) gelieferte Dialoginformation zu übertragen, und der mit dem Ausgang der Register (SR1, . . ., SR16) verbundene Multiplexer (MX0) in Aufeinanderfolge die von den Registern in der Zeit des spezifizierten Zeitkanals des vorhergehenden Rahmens gespeicherte Information zur Anpassungsvorrichtung überträgt.

8. Koppelnetz nach einem der Ansprüche 1 bis 7, dadurch gekennzeichnet, daß die Anpassungsvorrichtungen (TNBD) eine Diagnose der die Serien/Parallel- und Parallel/Serien-Umsetzung durchführenden Vorrichtungen (ITNBD), der die spezifizierten Zeitkanäle schaffenden Schaltungen (RTBE, RTBU) und der Verbindungen, auf denen die spezifizierten Zeitkanäle bereitgestellt werden und auf denen Sprechinformation übertragen wird, ermöglichen.

9. Koppelnetz nach Anspruch 5, dadurch gekennzeichnet, daß die integrierten Hilfsschaltungen (ITNBD1, . . ., TNBD5) für den Nachrichtenaustausch, die den Peripherieeinheiten (UL1, . . ., UL2048) zugeordnet sind, im Fall von individuell durch eine der peripheren Fernsprechsteuereinheiten (CTFa, . . ., CTFc) gesteuerten Peripherieeinheiten nur die Anpassungsvorrichtungen (TNBD1, . . ., TNBD5) enthalten und im Fall von gruppenweise durch eine einzige periphere Fernsprechsteuereinheit gesteuerten Peripherieeinheiten sowohl die Anpassungsvorrichtungen (TNBD1, . . ., TNBD5) als auch die die Serien/Parallel- und die Parallel/Serien-Umsetzung durchführenden Vorrichtungen (ITNBD1, . . ., ITNBD5) enthalten.

10. Koppelnetz nach einem der Ansprüche 1 bis 9, dadurch gekennzeichnet, daß diejenigen Matrizen (ME1, . . ., ME256, MU1, . . ., MU256) der Schalteinheiten (UC1a, . . ., UC256a), die auf die extremen Stufen des Koppelnetzes bezogen sind, eine Expansion bzw. eine Konzentration ihrer Eingangsbündel durchführen.

11. Koppelnetz nach einem der Ansprüche 1 bis 10, dadurch gekennzeichnet, daß jede der Schalteinheiten (UC1a, . . ., UC8c) körperlich in einer einzigen entnehmbaren und austauschbaren Standarkarte mit gedruckter Schaltung enthalten ist, die das modulare Strukturelement des Koppelnetzes bildet.

**Revendications**

1. Réseau de commutation MIC modulaire et autochercheur, à plusieurs étages temporels qui fait partie d'un central téléphonique avec des unités périphériques de commande téléphonique (CTFa . . . CTFc) distribuées sur la périphérie du réseau et qui comprend des unités de commutation modulaires repliées (UC1a . . . UC256a; UC1b . . . UC16b; UC1c . . . UC8c) constituées essentiellement par un organe local de commande du réseau réalisé à l'aide dun microprocesseur (CTR1a . . . CTR256a, CTR1b . . . CTR16b, CTR1c . . . CTR8c), par des matrices de commutation à circuit intégré (ME1 . . . ME256, MU1 . . . MU256, MCE1 . . . MCE16, MCU1 . . . MCU16, MCC1 . . . MCC16) avec commande compatible avec un microprocesseur, chaque unité de commutation (UC1a . . . UC8c) comprenant deux matrices (ME1, MU1 . . . ) commandées per le même organe local de commande (CTR1a . . . CTR8c) et telles que chaque unité de commutation comprend la jonction d'entrée et la jonction de sortie correspondante de et vers l'étage contigu ou de et vets la périphérie du réseau, et en outre par des circuits intégrés auxiliaires pour le diagnostic (CDTE1 . . . CDTE5, CDTU1 . . . CDTU5) l'organe local de commande (CTR1a . . . CTR8c) de chaque unité de commutation (UC1a . . . UC8c) étant connecté aux organes de commande (CTR1a . . . CTR8c) d'une pluralité d'unités faisant partie d'étages contigus et/ou des unités périphériques distribuées de commande téléphonique (CTFa . . . CTFc), pour l'échange de messages relatifs à la commande du réseau, au moyen des mêmes jonctions MIC qui acheminent la parole entre étages contigus et de et vers la périphérie du réseau, caractérisé en ce que chaque matrice (ME1 . . . MCC16) et chaque unité de la périphérie (UL1 . . . UL2048) sont associées avec des circuits intégrés (RTBE1 . . . RTBE5, RTBU1 . . . RTBU5) qui réalisent, sur une ou une pluralité de ces jonctions, un certain nombre de voies qui sont des voies temporelles dédiées qui ne sont pas utilisées pour la parole mais pour la transmission desdits messages en direction opposée à celle de transmission de la parole sur les mêmes jonctions, et des circuits intégrés auxiliaires (TNBD1 . . . TNBD5, ITNBD1 . . . ITNBD5) pour l'échange des ces messages en utilisant ces voies temporelles dediées.

2. Réseau suivant la revendication 1, caractérisé en ce que les circuits intégrées (RTBE, RTBU) réalisant les voies temporelles dédiées et lesdites jonctions rendent disponible, pour les messages de commande sur chaque jonction, une bande égale au moins à celle d'un faisceau MIC entier.

# 0 097 360

3. Réseau selon la revendications 1 ou 2, caractérisé en ce que les voies temporelles dédiées comporte une voie temporelle dédiée pour chaque jonction MIC.

4. Réseau selon l'une quelconque des revendications de 1 à 3, caractérisé en ce que les circuits intégrés (RTBE1 ... RTBU5) réalisant les voies temporelles dédiées comprennent une émetteur-récepteur duplex (RTBE1 ... RTBE5) connecté à l'entrée de parole de la matrice (ME1 ... ME16) ou respectivement de l'unité de la périphérie (UL1 ... UL2048), et un émetteur-récepteur duplex (RTBU1 ... RTBU5) connecté à la sortie de parole de la même matrice (ME1 ... ME16) ou de la même unité de la périphérie (UL1 ... UL2048), l'émetteur-récepteur d'entrée (RTBE1 ... RTBE5) acheminant la parole vers la matrice ou vers l'unité de la périphérie, et transférant les messages relatifs à la commande du réseau, qu'il reçoit desdits circuits intégrés auxiliaires (ITNBD1 ... TNBD5) pour l'échange des messages, vers l'émetteur-récepteur de sortie (RTBU1 ... RTBU5) associé à une matrice d'un étage adjacent ou à une unité de la périphérie, et l'émetteur-récepteur de sortie (RTBU1 ... RTBU5) transférant la parole vers l'émetteur-récepteur d'entrée associé à une matrice (ME1 ... MCC16) d'un étage adjacent ou à une unité de la périphérie (UL1 ... UL2048), et transférant les messages qu'il reçoit de l'organe de commande de cette matrice de l'étage adjacent ou de l'unité périphérique de commande téléphonique (CTFa ... CTFc) associée avec ladite unité de la périphérie, vers les circuits intégrés auxiliaires (ITNBD1 ... TNBD5) pour l'échange des messages.

5. Réseau selon l'une quelconque des revendications de 1 à 4, caractérisé en ce que les circuits intégrés auxiliaires (ITNBD1 ... TNBD5) pour l'échange de messages, associés aux unités de commutation (UC1a ... UC8c), comprennent:

—un dispositif d'interface (TNBD1 ... TNBD5) apte d'un côté à recevoir de façon asynchrone de l'organe de commande (CTR1a ... CTR8c) de l'unité de commutation (UC1a ... UC8c) un ou plusieurs messages formés par une pluralité de mots, à mémoriser ce(s) message(s) et à insérer les mot de ce(s) message(s) dans autant de voies d'une pluralité de trames d'une transmission MIC à introduire dans les voies temporelles dédiées, et de l'autre côté à recevoir de ces voies temporelles dédiées un ou plusieurs messages organisés en une transmission MIC et formés par une pluralité de mots, de mémoriser ces mots jusqu'à la réception complète du message ou des messages et de les transférer de façon asynchrone à l'organe de commande (CTR) lui associé;

—un dispositif de conversion série-parallèle et parallèle série (ITNBD1 ... ITNBD5), ayant une première entrée et une première sortie connectées respectivement au côté réception (Rxu) de l'émetteur-récepteur de sortie (RTBU1 ... RTBU5) et au côté transmission (Txe) de l'émetteur-récepteur d'entrée (RTBE1 ... RTBE5) et une seconde entrée et une seconde sortie connectées au dispositif d'interface (TNBD1 ... TNBD5), le dispositif de conversion étant apte à extraire en parallèle des voies temporelles dédiées associées aux faisceaux de sortie de la matrice, par l'intermédiaire de l'émetteur-récepteur de sortie, le contenu de ces voies et à le transférer, sous forme d'une trame MIC, au dispositif d'interface correspondant (TNBD1 ... TNBD5), et apte à distribuer, par l'intermédiaire de l'émetteur-récepteur d'entrée, les messages contenus dans une même transmission MIC en provenance dudit dispositif d'interface (TNBD1 ... TNBD5) parmi les voies temporelles dédiées pour le dialogue entre les organes de commande associées à tous les faisceaux d'entrée de la matrice.

6. Réseau selon la revendication 5, caractérisé en ce que les dispositifs de conversion série/parallèle et parallèle/série (ITNBD1 ... ITNBD5) comprennent autant de registres à décalage (SR1 ... SRn) qu'il y a de faisceaux d'entrée ou sortie d'une matrice, et en ce que le premier registre (SR1) a l'entrée connectée à la ligne (n) qui achemine la transmission MIC en provenance du dispositif d'interface (TNBD1 ... TNBD5) correspondant et la sortie connectée au premier faisceau d'entrée de la matrice, tandis que les autres registres (SR2 ... SR16) ont l'entrée connectée à la sortie d'un multiplexeur (MX2 ... MX16) à deux entrées, dont une première entrée est connectée à un des faisceaux MIC de sortie de la matrice et l'autre entrée est connectée à la ligne (n) qui achemine la transmission MIC en provenance du dispositif d'interface (TNBD1 ... TNBD5), les sorties desdits autres registres étant connectées aussi bien aux faisceaux d'entrée de la matrice, par l'intermédiaire de portes ET (P2 ... P16), qu'à autant d'entrées d'un autre multiplexeur (MX0) dont une autre entrée est connectée au premier faisceau de sortie de la matrice et une sortie est connectée à la ligne (m) qui achemine au dispositif d'interface (TNBD1 ... TNBD5) les informations portées par les voies temporelles dédiées de dialogue entre les organes de commande.

7. Réseau selon la revendication 6, caractérisé en ce que les dispositifs de conversion série/parallèle et parallèle/série comprennent également une base de temps (BT) qui d'après des signaux de synchronisme de bit et de trame d'une transmission MIC, engrendre en chaque trame de la transmission MIC des signaux de validation et commande pour les registres à décalage (SR1 ... SR16), les multiplexeurs (MX0 ... MX16) et les portes ET (P1 ... P16) de manière que: dans l'intervalle de temps reservé aux voies temporelles dédiées de dialogue entre les organes de commande, on prélève des faisceaux de sortie de la matrice les informations de dialogue présentes dans la trame et on transfère aux faisceaux d'entrée les informations de dialogue fournies par le dispositif d'interface (TNBD1 ... TNBD5) et mémorisées dans les registres dans la trame précédente; les multiplexeurs (MX2 ... MX16) connectés aux entrées des registres à décalage (SR2 ... SR16) soient validés en séquence à transférer aux registres les informations de dialogue fournies dans cette trame par le dispositif d'interface (TNBD1 ... TNBD5); et le multiplexeur (MX0) connecté à la sortie des registres (SR1 ... SR16) transfère en séquence au dispositif d'interface les informations mémorisées en ces registres dans l'intervalle de temps de la voie temporelle dédiée de dialogue de la trame précédente.

15

8. Réseau selon l'une quelconque des revendications de 1 à 7, caractérisé en ce que les dispositifs d'interface (TNBD) permettant un diagnostic des dispositifs (ITNBD) de conversion série-parallèle et parallèle-série, des circuits (RTBE, RTBU) qui réalisent les voies temporelles dédiées et des jonctions sur lesquelles sont réalisées les voies temporelles dédiées et sont transmises les informations de parole.

9. Réseau selon la revendication 5, caractérisé en ce que les circuits intégrés auxiliaires (ITNBD1 ... TNBD5) pour l'échange de messages associés aux unités de la périphérie (UL1 ... UL2048) comprennent seulement les dispositifs d'interface (TNBD1 ... TNBD5) au cas d'unités de la périphérie commandées individuellement par une unité périphérique de commande téléphonique, et comprennent les dispositifs d'interface (TNBD1 ... TNBD5) aussi bien que les dispositifs de conversion série-parallèle et parallèle-série (ITNBD1 ... ITNBD5) au cas d'unités de la périphérie commandés par groups par une seule unité périphérique de commande téléphonique.

10. Réseau selon l'une quelconque des revendications de 1 à 9, caractérisé en ce que les matrices (ME1 ... ME256, MU1 ... MU256) des unités de commutation (UC1a ... UC256a) relatives aux étages extrêmes du réseau effectuent une expansion ou respectivement une concentration de leurs faisceaux d'entrée.

11. Réseau suivant l'une quelconque des revendications de 1 à 10, caractérisé en ce que chaque unité de commutation (UC1a ... UC8c) est physiquement contenue dans une seule carte de circuit imprimé mormalisée qui peut être extraite et remplacée et qui forme l'élément structurel modulaire du réseau.

Fig.1

FIG. 2

Fig. 3

0 097 360

0 097 360

Fig. 4

Fig. 5

0 097 360

ITNBD

Fig. 6

Fig. 7
Fig. 7 bis

Fig. 7 bis